**Europäisches Patentamt**

(19) **European Patent Office**

**Office européen des brevets**

(11) Veröffentlichungsnummer: **0 163 007**

**B1**

(12) # EUROPÄISCHE PATENTSCHRIFT

(45) Veröffentlichungstag der Patentschrift:
23.11.88

(51) Int. Cl.⁴: **B 67 D 1/04,** F 16 K 17/168

(21) Anmeldenummer: **85101661.8**

(22) Anmeldetag: **15.02.85**

(54) **Ausgabe- und Sicherheitsventil für einen Sahnesiphon o.dgl.**

(30) Priorität: **26.05.84 DE 3419736**

(43) Veröffentlichungstag der Anmeldung:
**04.12.85 Patentblatt 85/49**

(45) Bekanntmachung des Hinweises auf die Patenterteilung:
**23.11.88 Patentblatt 88/47**

(84) Benannte Vertragsstaaten:
**AT BE CH FR GB IT LI LU NL**

(56) Entgegenhaltungen:
**AT-B-373 850**
**DE-A-2 648 333**
**DE-C-2 810 996**
**FR-A-2 269 009**
**US-A-3 197 144**
**US-A-3 272 404**
**US-A-3 976 221**

(73) Patentinhaber: **HEIMSYPHON GmbH,**
**Mittelitterstrasse 12- 16, D-5650 Solingen 19 (DE)**

(72) Erfinder: **Klarenbach, Hans Werner, Zaunholz**
**Busch 18, D-5657 Haan 1 (DE)**
Erfinder: **Schmitz, Herbert, Hahnsweide 68, D-5166**
**Kreuzau 2 (DE)**

(74) Vertreter: **Mentzel, Norbert, Dipl.- Phys.,**
**Patentanwälte Dipl.- Phys. Buse Dipl.- Phys.**
**Mentzel Dipl.- Ing. Ludewig Unterdörnen 114,**
**D-5600 Wuppertal 2 (DE)**

LIBER, STOCKHOLM 1988

## Beschreibung

Die Erfindung bezieht sich auf ein Ausgabe- und Sicherheitsventil für einen Sahnesyphon, das durch ein unter Einfluß einer Feder stehendem Betätigungselement steuerbar und in dem Deckel des Sahneaufnahmebehälters gelagert ist.

Es ist bekannt, diese Geräte mit einem Sicherheitsventil auszurüsten, das sich beim Überschreiten eines vorbestimmten Höchstdruckes selbsttätig öffnet. Die Verwendung zweier getrennter Ventile, wobei das eine zur Ausgabe und das andere zur Sicherheit dient, erhöht einmal den Herstellungsaufwand beträchtlich und bietet zum anderen wegen der kleinen Flächen des Verschlußdeckels, in dem die Ventile untergebracht werden müssen, aus konstruktiven Gründen Schwierigkeiten.

Um hier Abhilfe zu schaffen, hat man auch schon versucht, das Ausgabeventil mit einem eingebauten Sicherheitsventil auszurüsten. Diese Möglichkeit bietet sich aber nur dann, wenn das Ausgabeventil mit Hilfe eines Betätigungshebels in eine Offen- oder Schließlage überführt werden kann. Für die übrigen Ausführungsformen, bei denen das Ausgabeventil durch Hin- und Herbewegen eines Dosierstiftes gesteuert wird, war ein besonderes Sicherheitsventil erforderlich.

Durch die DE-PS-2 810 996 ist ein Abgabeventil für aufgeschlagene Sahne bekanntgeworden, das mittels eines zweiarmigen Hebels betätigbar ist und mit dem Deckel eines mit einer Sahneabgabetülle versehenen Behälters eine Einheit bildet. Der Behälter ist zur Aufnahme einer Mischung aus Sahne und unter Druck stehendem Gas bestimmt. Der Deckel des Behälters hat in einem Bereich größerer Dicke ein durchgehendes Loch, das durch ein Ventil abschließbar ist, welches unter der Einwirkung einer Feder steht, die die ihr entgegenwirkende Schubkraft infolge des im Inneren des Behälters herrschenden normalen Betriebsdruckes dabei überwindet. Bei dieser vorbekannten Ausführungsform des Ausgabeventils hat dieses zugleich die Funktion eines Sicherheitsventils. Die Federkraft der Feder, welche das Ventil belastet, ist dabei so bemessen, daß sie dann nachgibt, wenn der Innendruck die vorgesehenen Grenzwerte überschreitet. Dies ist beispielsweise dann der Fall, wenn im Inneren des Behälters Überdruck auftritt. Ein solcher Überdruck bewirkt das Anheben eines Ansatzorganes und führt zu einer Abgabe des Behälterinhaltes so lange, bis der Betriebsdruck im Behälter wieder hergestellt ist.

Der Erfindung liegt die Aufgabe zugrunde, ein Ausgabe- und Sicherheitsventil der gattungsgemäßen Art zu schaffen, welches sich aus wenigen Einzelteilen zusammensetzt und welches sich nachträglich in einen bereits vorhandenen Sahnesyphon einsetzen läßt.

Gelöst wird diese Aufgabe durch einen inneren, zum Behälterinneren hin offenen Hohlraum, in dem ein separater Sicherheitskolben verschieblich gelagert ist, welcher an seinem zum Behälteräußeren weisenden Ende in einer rinnenartigen Vertiefung eine mit der Wand der Kammer in Wirkverbindung stehende Dichtung aufnimmt und der an seinem anderen Ende einen verbreiterten Kopf aufweist, an dem sich das eine Ende einer Ventilfeder abstützt, deren anderes Ende an der zum Behälterinneren weisenden Stirnfläche der Hohlraumwand anliegt, wobei die Wand des Hohlraumes zur Atmosphäre hin offene Auslässe oder Erweiterungen aufweist, die beim Ansprechen des Sicherheitsventils mit dem Behälterinnenraum in Verbindung kommen. Bei dieser Ausbildung ergibt sich der Vorteil, daß das Sicherheitsventil raumsparend und geschützt in dem Ausgabeventil eingebettet ist. Eine bauliche Veränderung des Sahnesyphons entfällt. Das in das Ausgabeventil eingesetzte Sicherheitsventil beeinträchtigt in keiner Weise die Funktion des Ausgabeventils. Es ist eine gute Führung des Sicherheitskolbens und auch ein sicheres Ansprechen des Sicherheitsventils beim Überschreiten des zulässigen Höchstdruckes erzielt.

Nach einem weiteren Merkmal der Erfindung kann das freie Ende des Sicherheitskolbens als Kegelstumpf ausgebildet sein. Dies ist aus fertigungstechnischen Gründen empfehlenswert.

Zweckmäßig kann der zum Behälterinneren hin offene Hohlraum durch eine Schraubbuchse abgedichtet sein, wobei die Schraubbuchse eine Ventilöffnung aufweist, die durch den als Ventilteller ausgebildeten verbreiterten Kopf des Sicherheitskolbens absperrbar ist. Durch diese Ausbildung wird sichergestellt, daß der Sicherheitskolben auch beim Füllen des Sahnesyphons nicht aus dem Hohlraum herausfallen kann.

Auf der Zeichnung ist die Erfindung in einem Ausführungsbeispiel dargestellt. Es zeigt:

Fig. 1 einen Sahnesyphon in Seitenansicht,

Fig. 2 einen Schnitt durch das Kopfstück eines Sahnesyphons, bei dem das Ausgabeventil durch einen federbelasteten Betätigungshebel steuerbar ist,

Fig. 3 einen vergrößerten Teilschnitt durch Bereiche des Kopfstückes der Ausführungsform des Sahnesyphons nach der Fig. 2 und

Fig. 4 bis 6 vergrößerte Schnitte durch weitere Ausführungsformen eines Ausgabeventils eines Syphons mit eingesetztem Sicherheitsventil.

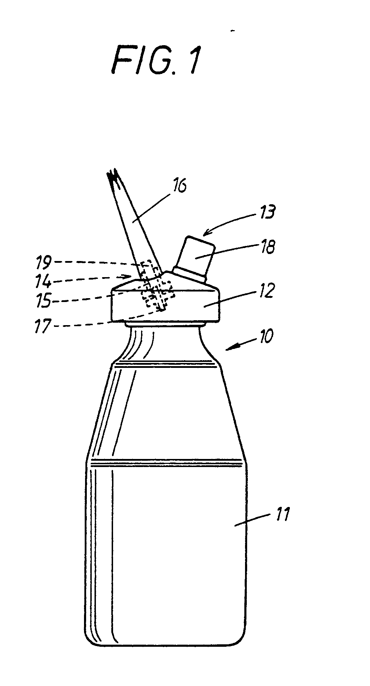

Der in der Fig. 1 dargestellte und mit dem Bezugszeichen 10 gekennzeichnete Sahnesyphon besteht aus dem Sahneaufnahmebehälter 11 aus Metall, insbesondere Leichtmetall, dem aufschraubbaren Kopfstück 12 aus Kunststoff, das den Innenraum des Behälters 11 verschließt, einem Füllventil 13 zum Anschluß der nicht dargestellten Sahnedruckkapsel. Mit 18 ist eine Schutzkappe und mit 14 ein Ausgabeventil bezeichnet, auf dessen Hohlkolben 15 die Ausgabetülle 16 sitzt. Ferner ist ein Sicherheitsventil 17 vorhanden.

Die Sahne wird bei abgeschraubtem Kopfstück in den Innenraum des Sahneaufnahmebehälters 11 eingefüllt. Sobald dies erfolgt ist, wird die Behälteröffnung mit dem Kopfstück 12 verschlossen. Nun wird in bekannter Weise die Sahnedruckkapsel in den Kapselhalter gelegt und gemeinsam mit diesem auf das Füllventil 13 geschraubt. Ein in dem Füllventil 13 sitzender Anstechstift durchsticht beim Schraubvorgang die Anstechfläche der Sahnedruckkapsel, so daß das Stickoxydul das sich in der Sahnedruckkapsel befindet, über das Füllventil 13 in den Innenraum des Behälters 11 gelangen kann. Die Sahne wird beim Einfüllvorgang aufgeschäumt und steht unter Druck. Das Füllventil 13 wird bei Nichtbenutzung des Sahnesyphons 10 durch die Schutzkappe 18 verschlossen.

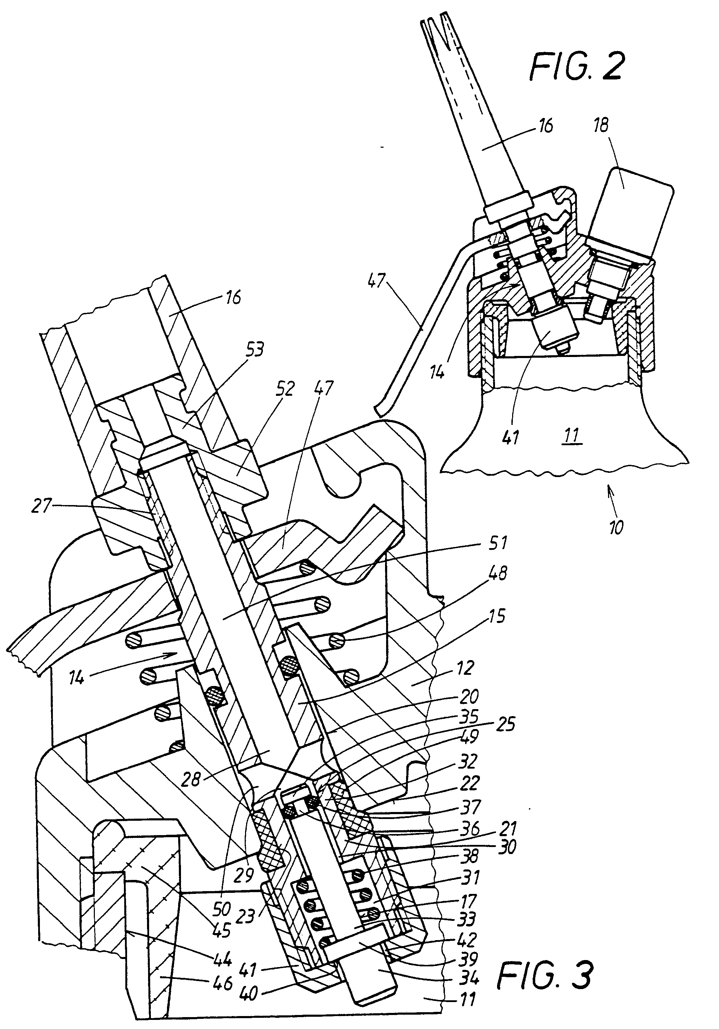

Wie aus den Fig. 2 und 3 der Zeichnung hervorgeht, erfolgt das Öffnen und Schließen des Ausgabeventils 14 durch einen Betätigungshebel 47, der durch eine Feder 48 in seiner Schließlage gehalten wird. Der Hohlkolben 15 des Ausgabeventils 14 ist in einer Lagerbohrung 20 im Kopfstück 12 unter Zwischenschalten einer Dichtung 49 verschiebbar aufgenommen. Die Dichtung 49 ist am Fußstück 21 des Hohlkolbens 15 in einer Nut 23 befestigt und legt sich mit einem Teilbereich gegen die Unterseite 22 des Kopfstückes 12.

Beim Niederdrücken des Betätigungshebels 47 wird der Hohlkolben 12 in den Innenraum des Sahneaufnahmebehälters 11 verschoben, so daß die aufgeschäumte Sahne durch die Öffnungen 50 und den Kanal 51 des Hohlkolbens 15 zur Ausgabetülle 16 gelangen kann. Der Betätigungshebel 47 ist über eine Schraubmutter 52 mit dem Stutzen 27 des Hohlkolbens 15 verbunden, wie es die Fig. 3 der Zeichnung erkennen läßt. Eine der Schraubmutter 52 angeformter Stutzen 53 trägt die Ausgabetülle 16.

Wie aus der Fig. 3 ersichtlich, weist das Ausgabeventil 14 einen inneren Hohlraum 29 auf, der in Kammern 30, 31 unterschiedlicher Größe unterteilt ist und der das Sicherheitsventil 17 aufnimmt.

Das freie Ende 35 des Sicherheitsventilschaftes 33 ist mit einer rinnenartigen Vertiefung 36 ausgerüstet, in der eine Dichtung 37 sitzt, die mit den Wänden 32 der Kammer 30 in Wirkverbindung steht. In der zweiten Kammer 31 ist die Ventilfeder 38 gelagert, die den Ventilkopf 39 des Sicherheitskolbens 34 belastet. Die Öffnung 40 der Kammer 31 wird durch eine Schraubbuchse 41 abgedichtet. In der Schraubbuchse 41 ist eine Ventilöffnung 42 eingelassen, die durch den Ventilkopf 39 über die Dichtung 37 abgesperrt ist.

Wenn im Innenraum des Sahnneaufnahmebehälters 11 der zulässige Höchstdruck überschritten wird, öffnet sich das Sicherheitsventil 17 dadurch, daß der Ventilkopf 39 die Ventilöffnung 42 freigibt, weil die Kraft der Ventilfeder 38 nicht mehr ausreicht, um den Ventilkopf 39 in seiner Sperrstellung zu halten.

Die unter dem Überdruck stehende aufgeschäumte Sahne kann nunmehr aus der Ventilöffnung 42 austreten und über die Kammern 31, 30, über die Ventilöffnung 20 und den Innenraum 28 des Kanals 51 durch die Ausgabetülle 16 entweichen.

Die Öffnung 44 des Sahneaufnahmebehälters 11 ist mit einer Dichtung 45 aus Gummi oder Kunststoff ausgerüstet, die mit einem Kragen 46 in den Innenraum des Sahneaufnahmebehälters 11 hineinragt.

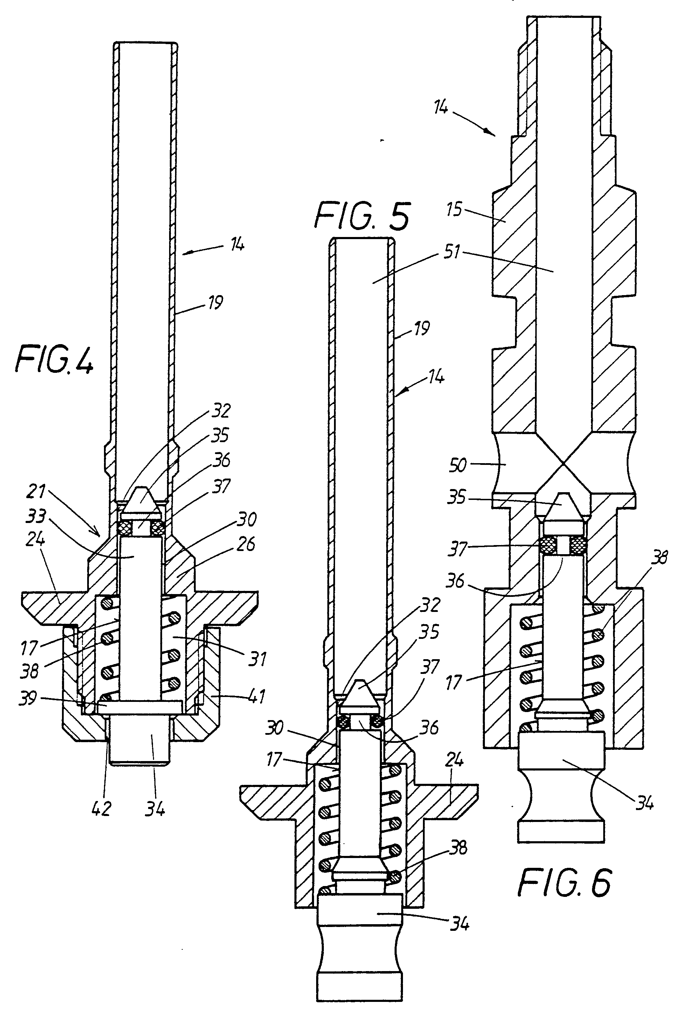

Die Fig. 4 zeigt eine weitere Ausführungsform eines Ausgabeventils, von dem lediglich der Dosierstift 19 vergrößert dargestellt ist. Der Dosierstift ist als Hohlkörper ausgebildet. Das freie Ende 35 des Ventilschaftes 33 ist als Kegelstumpf gestaltet, um den Einbau des Sicherheitsventils 17 zu erleichtern. Die übrigen Bauteile des Sicherheitsventils sind nicht geändert worden, so daß hierfur die gleichen Bezugszeichen verwendet werden.

Der in der Fig. 5 wiedergegebene Dosierstift 19 des Ausgabeventils 14 unterscheidet sich von derjenigen nach der Fig. 4 im wesentlichen dadurch, daß die Schraubbuchse 41 fehlt. Versuche haben ergeben, daß die Klemmwirkung der Dichtung 37 an den Wänden 32 der Kammer 30 ausreicht, um den Sicherheitskolben 34 in der Schließstellung zu halten. In der Offenstellung wird der Sicherheitskolben 34 des Sicherheitsventils 17 so weit nach innen verschoben, daß die Dichtung 37 in den oberen Kanal 51 gelangt, dessen Querschnitt gegenüber demjenigen der Kammer 30 größer bemessen ist.

Eine weitere Ausführungsform eines Ausgabeventils zeigt die Fig. 6. Bei dieser Ausführungsform sind im Gegensatz zu derjenigen nach der Fig. 5 offene Auslässe zur Atmosphäre hin vorhanden.

Wie bereits erwähnt, sind die dargestellten Ausführungen nur beispielsweise Verwirklichungen der Erfindung. Diese ist nicht darauf beschränkt. Es sind noch mancherlei Abänderungen und Ausbildungen möglich. So könnten die Hohlkolben 15 und die Dosierstifte 19 andere Formen aufweisen. Ferner kann das Ausgabe- und Sicherheitsventil auch für Schlagsahnegeräte, Sahnebereiter, Rahmbläser und ähnliche Geräte verwendet werden.

## Patentansprüche

1. Ausgabe und Sicherheitsventil für einen Sahnesyphon, das durch ein unter Einfluß einer Feder stehendes Betätigungselement steuerbar und in dem Deckel des Sahneaufnahmebehälters gelagert ist,
gekennzeichnet durch
einen inneren, zum Behälterinneren hin offenen Hohlraum (29), in dem ein separater Sicherheitskolben (34) verschieblich gelagert ist, welcher an seinem zum Behälteräußeren weisenden Ende (35) in einer rinnenartigen Vertiefung (36) eine mit der Wand (32) der Kammer (30) in Wirkverbindung stehende Dichtung (37) aufnimmt und der an seinem anderen Ende einen verbreiterten Kopf (39) aufweist, an dem sich das eine Ende einer Ventilfeder (38) abstützt, deren anderes Ende an der zum Behälterinneren weisenden Stirnfläche der Hohlraumwand anliegt, wobei die Wand (32) des Hohlraumes (29) zur Atmosphäre hin offene Auslässe oder Erweiterungen aufweist, die beim Ansprechen des Sicherheitsventils (17) mit dem Behälterinnenraum in Verbindung kommen.

2. Ventil nach Anspruch 1, dadurch gekennzeichnet, daß das freie Ende (35) des Sicherheitsventilschaftes (33) als Kegelstumpf ausgebildet ist.

3. Ventil nach Anspruch 1 und 2, dadurch gekennzeichnet, daß der zum Behälterinneren hin offene Hohlraum (29) durch eine Schraubbuchse (41) abgedichtet ist, wobei die Schraubbuchse (41) eine Ventilöffnung (42) aufweist, die durch den als Ventilteller ausgebildeten, verbreiterten Kopf (39) des Sicherheitskolbens (34) absperrbar ist.

## Claims

1. Delivery and safety valve for a cream siphon adapted to be controlled by an actuating element subject to the influence of a spring and mounted in the lid of a cream container, characterized by, open to the interior of the container, a cavity (29) in which there is a displaceably mounted separate safety piston (34) which at its end (35) which is towards the outside of the container, accommodates in a channel-like depression (36) a packing (37) which is operatively connected to the wall (32) of the chamber (30) and which has at its other end a widened head (39) on which is braced one end of a valve spring (38), the other end of which bears on that end face of the cavity wall which is towards the interior of the container, the wall (32) of the cavity (29) having open to the atmosphere outlets or widened portions which come in contact with the interior of the container when the safety valve (17) responds.

2. A valve according to Claim 1, characterized in that the free end (35) of the safety valve stem (33) is constructed as a truncated cone.

3. A valve according to claim 1 and 2, characterized in that the cavity (29) which is open towards the interior of the container is sealed by a screwed bush (41), the screwed bush (41) comprising a valve aperture (42) adapted to be closed by the widened head (39) of the safety piston (34) which is constructed as a valve plate.

## Revendications

1. Valve de distribution et de sûreté pour un distributeur de crème fraîche, qui peut être commandée par un élément de manoeuvre à ressort et qui est logée dans le couvercle du réservoir de crème fraîche, caractérisée par une cavité (29) intérieure ouverte vers l'intérieur du réservoir, dans laquelle est logé un piston de sûreté (34) susceptible d'être déplacé dans cette cavité, ledit piston recevant dans sa partie (35) qui est dirigée vers l'extérieur du réservoir, dans une rainure (36), un joint d'étanchéité (37) qui vient en contact avec la paroi (32) de la chambre (30) et qui présente à l'autre extrémité une tête élargie (39) sur laquelle s'appuie une extrémité d'un ressort de valve (38), tandis que l'autre extrémité repose sur la surface frontale de la cavité et faisant face à celle-ci; dans cette disposition, la paroi (32) de la cavité (29) possède des sorties ou élargissements vers l'atmosphère qui communiquent avec l'intérieur du réservoir quand la valve de sûreté (17) réagit.

2. Valve selon la revendication 1, caractérisée en ce que l'extrémité libre (35) de la tige de valve de sûreté (33) est formée comme un tronc de cône.

3. Valve selon la revendication 1 et 2, caractérisée en ce que la cavité (29) ouverte vers l'intérieur du réservoir peut être rendu étanche par une douille filetée (41) qui présente un orifice de valve (42) qui peut être fermé ou ouvert par la tête élargie (39) du piston de sûreté (34) lequel à la forme d'un disque.

# FIG. 1

0 1 6 3 0 0 7

FIG. 2

FIG. 3

3

FIG.4

FIG. 5

FIG. 6